# EUROPÄISCHE PATENTANMELDUNG

(11) **EP 1 621 541 A2**
(43) Veröffentlichungstag der Anmeldung: **01.02.2006**
(21) Anmeldenummer: 05011994.0
(22) Anmeldetag: 03.06.2005
(51) Int. Cl.: C07F 5/02

(54) **Verfahren zur Herstellung von Alkylboronsäureestern**

(30) Priorität: 29.07.2004 DE 102004036853
(71) Anmelder: BASF Aktiengesellschaft, 67056 Ludwigshafen (DE)
(72) Erfinder: Griesbach, Ulrich, Dr., 68305 Mannheim (DE); Elsner, Oliver, 37037 Göttingen (DE)

(57) **Zusammenfassung**

Verfahren zur Herstellung eines Alkylboronsäureesters (Alkylboronsäureester I), wobei man ein Alkylchlorid, -bromid oder -iodid (Alkylhalogenverbindung II), mit einem Borsäure- oder einem Boronsäureester (Bor(on)säureester III) oder einem 1,1,2,2-Tetraalkoxydiboran (Tetraalkoxydiboran IV), elektrochemisch reduktiv kuppelt.

## Beschreibung

Die vorliegende Erfindung betrifft ein elektrochemisches Verfahren zur Herstellung von Alkylboronsäureestern.

Alkylboronsäureester werden üblicherweise durch Hydroborierung der entsprechenden Olefine erhalten. Die Herstellung von Akylboronsäureestern auf elektrochemischem Weg ist bisher nicht bekannt.

Die elektrochemische Herstellung von Arylboronsäureestern durch Kupplung von Arylhalogeniden mit Pinakolboran in einer reduktiven Kupplung an Opferanoden aus a) C. Laza, E. Duñach, C. R. Chimie 2003, 6, 185-187 und b) C. Laza, E. Duñach, Adv. Synth. Catal. 2003, 345, 580-583 bekannt] Als Bor-Elektrophile können dabei auch die preisgünstigeren Borsäuretrimethyl- oder isopropylester eingesetzt werden [C. Laza, E. Duñach, F. Serien-Spirau, J. J. E. Moreau, L. Vellutini, New J. Chem. 2002, 26, 373-375].

Wegen der prinzipiellen Reaktivitätsunterschiede Aryl ↔ Benzyl ↔ Alkyl war für den Fachmann nicht zu erwarten, dass sich das elektrochemische Verfahren zur Synthese von Arylboronsäuren auch auf Benzyl- und Alkylsubstrate übertragen lässt. Denn der Fachmann weiss, dass die hier vorgestellten Umsetzungen mit der Grignard-Reaktion verwandt sind. Ihm ist bekannt, dass z.B. ein Grignard-Reagenz, das aus einem Benzylhalogenid hergestellt wird, mit noch unumgesetztem Benzylhalogenid in einer Wurtz-Kupplung größtenteils unter Dimerisierung abreagiert (vgl. H.G.O. Becker u.a., Organikum - Organisch-chemisches Grundpraktum, 12. neu bearbeitete und erweiterte Auflage, Wiley-VCH, Weinheim 2001 (Seite 559)). Grignard-Verbindungen, die aus Halogenaromaten erhalten werden, dimerisieren dagegen nicht. Dimersierung als Nebenreaktion durch Alkylierung der Grignard-Spezies kann ebenfalls bei der entsprechenden Umsetzung von Alkylhalogeniden erfolgen.

Die der Erfindung zugrunde liegende Aufgabe bestand darin, ein elektrochemisches Verfahren bereitzustellen, um wirtschaftlich und insbesondere in hohen Produktausbeuten und mit hoher Selektivität Alkylboronsäureester herzustellen.

Demgemäß wurde ein Verfahren zur Herstellung eines Alkylboronsäureesters (Alkylboronsäureester I) gefunden, wobei man ein Alkylchlorid, -bromid oder -iodid (Alkylhalogenverbindung II), mit einem Borsäure- oder einem Boronsäureester (Bor(on)säureester III) oder einem 1,1,2,2-Tetraalkoxydiboran (Tetraalkoxydiboran IV) elektrochemisch reduktiv kuppelt.

Unter Alkylboronsäureester sind solche Verbindungen zu verstehen, bei denen eine Alkylgruppe unmittelbar an das Boratom gebunden ist. Die Alkylgruppe ist dadurch charakterisiert, dass sie ein unmittelbar an das Boratom gebundenes Kohlenstoffatom mit sp³-Hybridisierung aufweist. Unter dem Begriff Alkyl sind in diesem Zusammenhang auch Cycloalkylgruppen zu verstehen, weiterhin ist nicht ausgeschlossen, dass die Alkylgruppe (ggf. auch durch aromatische Reste) substituiert ist.

Im allgemeinen wird ein Alkylboronsäureester I der allgemeinen Formel I hergestellt

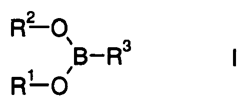

in der R¹ und R² C₁- bis C₂₀-Alkyl, C₃- bis C₁₂-Cycloalkyl, C₄- bis C₂₀-Cycloalkyl-alkyl oder C₄- bis C₁₀-Aryl, bedeuten oder R¹ und R² gemeinsam C₁- bis C₂₀-Alkandiyl-, C₃- bis C₁₂-Cycloalkandiyl oder C₄- bis C₂₀-Cycloalkyl-alkandiyl bilden und
R³ ein Rest der allgemeinen Formel A ist 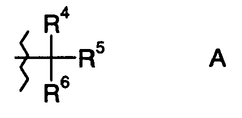 in der R⁴, R⁵ und R⁶ Wasserstoff, C₁- bis C₂₀-Alkyl, C₃- bis C₁₂-Cycloalkyl, C₄- bis C₂₀-Cycloalkyl-alkyl oder C₄- bis C₁₀-Aryl, C₅- bis C₂₀-Aryl-alkyl, C₂- bis C₂₀-Alkenyl bedeuten oder R⁴ und R⁵ gemeinsam C₁- bis C₂₀-Alkandiyl-, C₃- bis C₁₂-Cyclo-alkandiyl oder C₄- bis C₂₀-Cycloalkyl-alkandiyl bilden und die vorgenannten Reste ggf. durch Fluorid oder eine Amid-, eine Nitril-, eine C₁- bis C₂₀-Alkylamid- oder eine Di-(C₁- bis C₂₀-Alkyl)amidgruppe substituiert sein können.

Hierzu wird eine Alkylhalogenverbindung II der allgemeinen Formel II eingesetzt 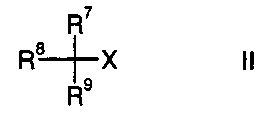 in der R⁷ die gleiche Bedeutung wie R⁴, R⁸ die gleiche Bedeutung wie R⁵ und R⁹ die gleiche Bedeutung wie R⁶ in der allgemeinen Formel II haben und X Cl, Br oder I bedeutet.
und
ein Bor(on)säureester III der allgemeinen Formel III, 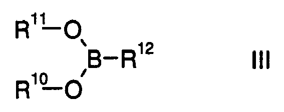 in der R¹⁰ die gleiche Bedeutung wie R¹ und R¹¹ die gleiche Bedeutung wie R² in der allgemeinen Formel I haben und
R¹² Wasserstoff, C₁- bis C₂₀-Alkoxy oder C₄- bis C₂₀-Aryloxy bedeutet
oder ein Tetraalkoxydiboran IV der allgemeinen Formel IV, 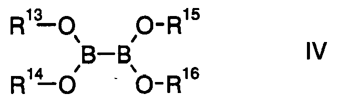 in der R¹³ die gleiche Bedeutung wie R¹, R¹⁴ die gleiche Bedeutung wie R², R¹⁵ die gleiche Bedeutung wie R¹ und R¹⁶ die gleiche Bedeutung wie R² in der allgemeinen Formel I haben.

Besonders bevorzugt wird Alkylboronsäureester I hergestellt, bei dem R³ ein Rest der Formel A bedeutet,
a1) bei der R⁴ und R⁵ gemeinsam C₅- oder C₆-Cycloalkandiyl und R⁶ Wasserstoff oder
b1) bei der R⁴ und R⁵ Wasserstoff und R⁶ Phenyl oder ein durch C₁- bis C₆-Alkyl substituiertes Phenyl bedeutet.

Entsprechend wird bevorzugt eine Alkylhalogenverbindung II der allgemeinen Formel II eingesetzt, bei der
a2) im obigen Fall (a1) R⁷ und R⁸ gemeinsam C₅- oder C₆-Cycloalkandiyl und R⁹ Wasserstoff oder
b2) im obigen Fall (b1) R⁷ und R⁸ Wasserstoff und R⁹ Phenyl oder ein durch C₁- bis C₅-Alkyl substituiertes Phenyl bedeuten.

Besonders bevorzugt wird ein Alkylboronsäureester I hergestellt, bei dem R¹ und R² gemeinsam Benzen-1,2-diyl oder 2,3-Dimethylbutan-2,3-diyl bedeutet.

Entsprechend wird bevorzugt
a3) als Bor(on)säureester III eine Verbindung eingesetzt, bei denen R¹⁰ und R¹¹ gemeinsam Benzen-1,2-diyl oder 2,3-Dimethylbutan-2,3-diyl bedeuten oder alternativ
a4) als Tetraalkoxydiboran IV eine Verbindung eingesetzt, bei der
   - R¹³ und R¹⁴ gemeinsam Benzen-1,2-diyl oder 2,3-Dimethylbut an-2,3-diyl und
   - R¹⁵ und R¹⁶ gemeinsam Benzen-1,2-diyl oder 2,3-Dimethylbutan-2,3-diyl bedeuten.

Die Alkylhalogenverbindungen II, Bor(on)säureester III und Tetraalkoxydiborane IV sind handelsüblich. Die Herstellung der Bor(on)säureester III und Tetraalkoxydiborane IV ist zudem aus folgenden Literaturstellen bekannt:

Die Herstellung von Bor(on)säureester III, insbesondere Pinakolboran ist bei C.E. Tucker, J. Davidson, P. Knochel, J. Org. Chem. 1992, 57, 3482-3485 beschrieben.

Die Herstellung von Bispinakoldiboran ist z.B. bei N.R. Anastasi, K.M. Waltz, W.L. Weerakoon, J.F. Hartwig, Organometallics 2003, 22, 365-369 und den dort zitierten Literaturstellen beschrieben. Die Schriften US 3009941 A1 und DE 1165005 B1 beschreiben die Synthese weiterer Tetraalkoxydiborane IV.

Im Elektrolyten werden Alkylhalogenverbindungen II und Bor(on)säureester III bzw. Tetraalkoxydiborane IV im Allgemeinen mindestens äquimolar eingesetzt. Bevorzugt werden die Bor(on)säureester III bzw. Tetraalkoxydiborane IV bezogen auf die Alkylhalogenverbindungen II im Überschuss eingesetzt, besonders bevorzugt im Verhältnis 1,1 : 1 bis 4 : 1.

Gegebenenfalls setzt man der Elektrolyselösung übliche Cosolvenzien zu. Dabei handelt es sich um die in der organischen Chemie allgemein üblichen inerten Lösungsmittel mit einem hohen Oxidationspotential. Beispielhaft genannt seien Tetrahydrofuran, Acetonitril, Dimethylformamid, Dimethoxyethan, Dimethylcarbonat oder Propylencarbonat.

Als Leitsalze, die in der Elektrolyselösung enthalten sind, handelt es sich im Allgemeinen um Alkali, Tetra(C₁- bis C₆-alkyl)ammonium-, bevorzugt Tri(C₁- bis C₆-alkyl)methylammoniumsalze. Als Gegenion kommen Sulfat, Hydrogensulfat, Alkylsulfate, Arylsulfate, Halogenide, Phosphate, Carbonate, Alkylphosphate, Alkylcarbonate, Nitrat, Alkoholate, Tetrafluorborat oder Perchlorat in Betracht. Besonders bevorzugt ist (CF₃SO₂)₂NLi.

Daneben eignen sich als Leitsalze auch ionische Flüssigkeiten. Geeignete ionische Flüssigkeiten sind beschrieben in "lonic Liquids in Synthesis", Hrsg. Peter Wasserscheid, Tom Welton, Verlag Wiley VCH, 2003, Kap. 3.6, Seiten 103 - 126.

Ganz besonders bevorzugt ist die Kombination von Tetrahydrofuran als Cosolvens und (CF₃SO₂)₂NLi als Leitsalz.

Das erfindungsgemäße Verfahren kann in allen üblichen geteilten oder ungeteilten Elektrolysezellentypen durchgeführt werden. Vorzugsweise arbeitet man kontinuierlich mit ungeteilten Durchflusszellen.

Besonders geeignet sind bipolar geschaltete Kapillarspaltzellen oder Plattenstapelzellen, bei denen die Elektroden als Platten ausgestaltet sind und planparallel angeordnet sind (vgl. Ullmann's Encyclopedia of Industrial Chemistry, 1999 electronic release, Sixth Edition, VCH-Verlag Weinheim, Volume Electrochemistry, Chapter 3.5. special cell designs sowie Chapter 5, Organic Electrochemistry, Subchapter 5.4.3.2 Cell Design). Als Elektrodenmaterial ist Graphit bevorzugt.

Weiterhin ist es bevorzugt, sogenannte "pencil-sharpener"-Zellen zu verwenden, wie sie beschrieben sind in J. Chaussard et al. J. Appl. Electrochem. 19 (1989), 345-348.

Die Elektrolysezellen sind im Allgemeinen mit einer Opferanode ausgerüstet. Die Entladung der Anode erfolgt dabei im wesentlichen dadurch, dass Metallatome, aus denen die Opferanode besteht, zu Kationen oxidiert werden. Das Kathodenmaterial ist deshalb im Allgemeinen ein Metall mit einem negativen Normalpotential. Bevorzugt ist Aluminium, Zink, Calcium oder vorzugsweise Magnesium.

Die Kathode besteht im Allgemeinen aus Grafit, Diamant, Platin, Eisen, Nickel oder einem Stahl, wobei der Stahl ausgewählt ist aus der Gruppe der unlegierten Stähle und der legierten Stähle mit Zusätzen von Chrom, Mangan oder Bor als Legierungsbestandteile. Unter dem Begriff Eisen ist nicht nur elementares Eisen sondern auch die bekannten Eisensorten, die als weitere Legierungsbestandteile mehr oder weniger Si, Mn, S, P und außerdem noch Zusätze von Al, Cr, Mn, Mo, Ni, Ta, Ti, Vn, Si, Co, und andere übliche Legierungsbestandteile enthalten, in Betracht. Besonders bevorzugt ist V₂A- oder V₄A-Edelstahl.

Die Form von Anode und Kathode ist nicht beschränkt und kann beispielsweise Gitter, Platten, Zylinder, Kegel oder Rohre umfassen.

Bei kontinuierlicher Durchführung des Verfahrens wählt man die Zulaufgeschwindigkeit der Einsatzstoffe im allgemeinen so, dass das Gewichtsverhältnis der Summe der Alkylhalogenide II, Bor(on)säureester III und Tetraalkoxydiboran IV zu den Alkylboronsäureestern I im Elektrolyten 10 : 1 bis 0,05 : 1 beträgt.

Die Stromdichten, bei denen man das Verfahren durchführt, betragen im allgemeinen 1 bis 1000, bevorzugt 1 bis 100 mA/cm². Im Allgemeinen wird bei Normaldruck gearbeitet. Höhere Drücke werden bevorzugt dann angewandt, wenn bei höheren Temperaturen gearbeitet werden soll, um eine Sieden der Ausgangsverbindungen bzw. des Lösungsmittels zu vermeiden.

Nach Beendigung der Reaktion wird die Elektrolytlösung nach allgemeinen Trennmethoden aufgearbeitet. Hierzu wird die Elektrolyselösung im Allgemeinen zunächst destilliert und die einzelnen Verbindungen in Form von unterschiedlichen Fraktionen getrennt gewonnen. Eine weitere Reinigung kann beispielsweise durch Kristallisation, Extraktion, Destillation oder chromatographisch erfolgen.

### Experimenteller Teil

### Beispiel1

### Synthese von 2-(4-Isopropyl-benzyl)-4,4,5,5-tetramethyl-[1,3,2]-dioxaborolan 4 ausgehend von Isopropylbenzylbromid 1

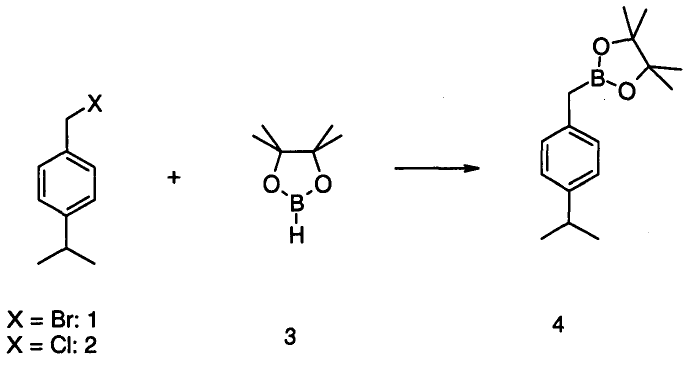

4-Isopropylbenzylbromid 1 (3,0 mmol, 0,64 g, 0,51 ml), (CF₃SO₂)₂NLi (4,2 mmol, 1,21 g) und Pinakolboran 3 (9,0 mmol, 1,15 g, 1,31 ml) wurden in THF (58 ml) gelöst. Die Elektrolyse wurde an einer Stahl-Kathode und einer Magnesium-Anode (effektive Fläche je 10 cm²) mit einer Anfahrspannung von 70 V für 30 s gestartet. Danach wurde mit konstanter Stromstärke von 0,06 A (i = 6 mA/cm²) elektrolysiert. An der Anode gingen 96,8 mg (3,98 mmol, 1,33 Äq.) Magnesium in Lösung.
Die gaschromatographische Analyse des Rohproduktes ergab eine Ausbeute von 81% an 4.

### Beispiel 2

### Synthese von 2-(4-Isopropyl-benzyl)-4,4,5,5-tetramethyl-[1,3,2]-dioxaborolan 4 ausgehend von 4-Isopropylbenzylchlorid 2

4-Isopropylbenzylchlorid 2 (3,0 mmol, 0,51 g, 0,49 ml), (CF₃SO₂)₂NLi (4,2 mmol, 1,2 g) und Pinakolboran 3 (9,0 mmol, 1,15 g, 1,3 ml) wurden in THF (58 ml) gelöst. Die Elektrolyse wurde an einer Stahl-Kathode und einer Magnesium-Anode (effektive Fläche je 10 cm²) mit einer Anfahrspannung von 65 V für 30 s gestartet. Danach wurde mit konstanter Stromstärke von 0,06 A (i = 6 mA/cm²) elektrolysiert. An der Anode gingen 108 mg (4,44 mmol, 1,48 Äq.) Magnesium in Lösung. Nach der Reaktion wurde das Lösungsmittel im Vakuum entfernt und der Rückstand mit 50 ml 1N-HCl aufgenommen. Es wurde viermal mit 50 ml CH₂Cl₂ extrahiert, die vereinigten organischen Phasen wurden zweimal mit 50 ml 0,05 M NaOH und 100 ml H₂O gewaschen, über Na₂SO₄ getrocknet und das Lösungsmittel im Vakuum entfernt. Es wurden 0,75 g (96%) 4 als farblose Flüssigkeit erhalten, die nach NMR-Analyse ca. 95%ig rein ist.

### Beispiel 3

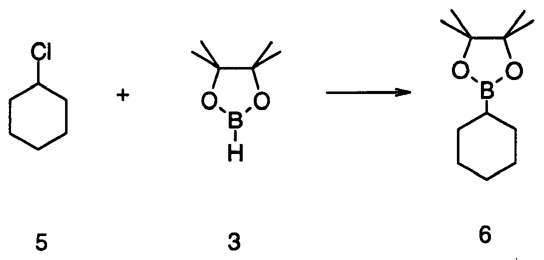

Synthese von 2-Cyclohexyl-4,4,5,5-tetramethyl-[1,3,2]-dioxa-borolan 6 Chlorcyclohexan 5 (3,0 mmol, 0,36 g), (CF₃SO₂)₂NLi (4,2 mmol, 1,21 g) und Pinakolboran 3 (9,0 mmol, 1,15 g, 1,31 ml) wurden in THF (58 ml) gelöst. Die Elektrolyse wurde an einer Stahl-Kathode und einer Magnesium-Anode (effektive Fläche je 10 cm²) mit einer Anfahrspannung von 60 V für 20 s gestartet. Die Elektrolyse wurde nach Applikation einer Ladungsmenge von 4,5 F/mol beendet. Das Lösungsmittel wurde im Vakuum entfernt, der Rückstand mit 50 ml 1 N-HCl aufgenommen und viermal mit 50 ml CH₂Cl₂ extrahiert. Die vereinigten organischen Phasen wurden zweimal mit 50 ml 0,05 N-NaOH und 100 ml H₂O gewaschen, über Na₂SO₄ getrocknet und das Lösungsmittel im Vakuum entfernt. Man erhielt 0,27 g (1,30 mmol, 44%) 6 als farblose Flüssigkeit, die nach NMR Analyse 80-90%ig rein ist. An der Anode gingen 136 mg (5,58 mmol, 1,86 Äq.) Magnesium in Lösung.

## Patentansprüche

1. Verfahren zur Herstellung eines Alkylboronsäureesters (Alkylboronsäureester I), wobei man ein Alkylchlorid, -bromid oder -iodid (Alkylhalogenverbindung II), mit einem Borsäure- oder einem Boronsäureester (Bor(on)säureester III) oder einem 1,1,2,2-Tetraalkoxydiboran (Tetraalkoxydiboran IV) elektrochemisch reduktiv kuppelt.

2. Verfahren nach Anspruch 1, wobei es sich handelt
1. bei dem Alkylboronsäureester I um eine Verbindung der allgemeinen Formel I 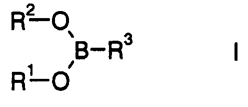
in der R¹ und R² C₁- bis C₂₀-Alkyl, C₃- bis C₁₂-Cycloalkyl, C₄- bis C₂₀₋Cycloalkyl-alkyl oder C₄- bis C₁₀-Aryl, bedeuten oder R¹ und R² gemeinsam C₁- bis C₂₀-Alkandiyl-, C₃- bis C₁₂-Cycloalkandiyl oder C₄- bis C₂₀-Cycloalkyl-alkandiyl bilden und
R³ ein Rest der allgemeinen Formel A ist 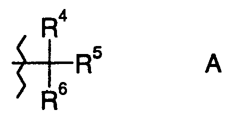
in der R⁴, R⁵ und R⁶ Wasserstoff, C₁- bis C₂₀-Alkyl, C₃- bis C₁₂-Cycloalkyl, C₄- bis C₂₀-Cycloalkyl-alkyl oder C₄- bis C₁₀-Aryl, C₅- bis C₂₀-Aryl-alkyl, C₂- bis C₂₀-Alkenyl bedeuten oder R⁴ und R⁵ gemeinsam C₁- bis C₂₀-Alkandiyl-, C₃- bis C₁₂-Cycloalkandiyl oder C₄- bis C₂₀-Cycloalkyl-alkandiyl bilden und die vorgenannten Reste ggf. durch Fluorid oder eine Nitro-, eine Amid-, eine Nitril-, eine C₁- bis C₂₀-Alkylamid- oder eine Di-(C₁- bis C₂₀-Alkyl)-amidgruppe substituiert sein können
II. bei der Alkylhalogenverbindung II um eine Verbindung der allgemeinen Formel II 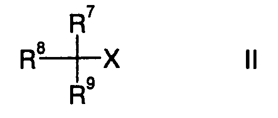 in der R⁷ die gleiche Bedeutung wie R⁴, R⁸ die gleiche Bedeutung wie R⁵ und R⁹ die gleiche Bedeutung wie R⁶ in der allgemeinen Formel II hat und X Cl, Br oder I bedeutet,
III. bei dem Bor(on)säureester III um eine Verbindung der allgemeinen Formel III, 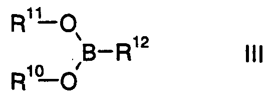 in der R¹⁰ die gleiche Bedeutung wie R¹ und R¹¹ die gleiche Bedeutung wie R² in der allgemeinen Formel I haben und
R¹² Wasserstoff oder C₁- bis C₂₀-Alkoxy oder C₄- bis C₂₀-Aryloxy bedeutet und
IV. bei dem Tetraalkoxydiboran IV um eine Verbindung der allgemeinen Formel IV, 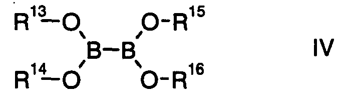
in der R¹³ die gleiche Bedeutung wie R¹, R¹⁴ die gleiche Bedeutung wie R², R¹⁵ die gleiche Bedeutung wie R¹ und R¹⁶ die gleiche Bedeutung wie R² in der allgemeinen Formel I haben.

3. Verfahren nach einem der vorgenannten Ansprüche, wobei man als Alkylhalogenverbindung II eine Verbindung einsetzt, bei der R⁷ und R⁸ gemeinsam C₅- oder C₆-Cycloalkandiyl und R⁹ Wasserstoff bedeutet.

4. Verfahren nach einem der Ansprüche 1 bis 3, wobei man als Alkylhalogen-verbindung II eine Verbindung einsetzt, bei der R⁷ und R⁸ Wasserstoff und R⁹ Phenyl oder ein durch C₁- bis C₆-Alkyl substituiertes Phenyl bedeutet.

5. Verfahren nach einem der vorgenannten Ansprüche, wobei man als Bor(on)-säureester III eine Verbindung einsetzt, bei der R¹⁰ und R¹¹ gemeinsam Benzen-1,2-diyl oder 2,3-Dimethylbutan-2,3-diyl bedeuten.

6. Verfahren nach einem der vorgenannten Ansprüche, wobei man als Tetraaikoxydiboran IV eine Verbindung einsetzt, bei der
- R¹³ und R¹⁴ gemeinsam Benzen-1,2-diyl oder 2,3-Dimethylbutan-2,3-diyl und
- R¹⁵ und R¹⁶ gemeinsam Benzen-1,2-diyl oder 2,3-Dimethylbutan-2,3-diyl bedeuten.

7. Verfahren nach einem der vorgenannten Ansprüche, wobei man das Verfahren in einer ungeteilten Zelle durchführt, die mit einer Opferanode ausgerüstet ist und die Entladung der Anode im wesentlichen **dadurch** erfolgt, dass Metallatome, aus denen die Opferanode besteht, zu Kationen oxidiert werden.

8. Verfahren nach Anspruch 7, wobei die Opferanode aus einem Metall mit einem negativen Normalpotential besteht.

9. Verfahren nach einem der vorgenannten Ansprüche, wobei man das Verfahren in einer Zelle durchführt, die mit einer Kathode aus Grafit, Diamant, Platin, Eisen, Nickel oder einem Stahl, wobei der Stahl ausgewählt ist aus der Gruppe der unlegierten Stähle und der legierten Stähle mit Zusätzen von Chrom, Mangan oder Bor als Legierungsbestandteile der legierten Stähle, ausgerüstet ist.

10. Verfahren nach einem der vorgenannten Ansprüche, wobei man einen Elektrolyten einsetzt, der Tetrahydrofuran als Cosolvens und (CF₃SO₂)₂NLi als Leitsalz enthält.
